Europäisches Patentamt

European Patent Office

Office européen des brevets

(11) Numéro de publication: **0 286 497**
**B1**

(19)

(12) **FASCICULE DE BREVET EUROPEEN**

(45) Date de publication du fascicule du brevet:
10.01.90

(21) Numéro de dépôt: **88400704.8**

(22) Date de dépôt: **23.03.88**

(51) Int. Cl.⁴: **B60J 5/04**

(54) Dispositif d'étanchéité de panneau ouvrant de véhicule automobile.

(30) Priorité: **30.03.87 FR 8704585**

(43) Date de publication de la demande:
**12.10.88 Bulletin 88/41**

(45) Mention de la délivrance du brevet:
**10.01.90 Bulletin 90/2**

(84) Etats contractants désignés:
**DE GB IT**

(56) Documents cités:
**DE-A- 2 122 812**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Berthommier, Michel, 8, rue Max Dormoy, F-92260 Fontenay-Aux-Roses(FR)**

(74) Mandataire: **Boivin, Claude, 9, rue Edouard-Charton, F-78000 Versailles(FR)**

ACTORUM AG

## Description

L'étanchéité des panneaux ouvrants des vehicules automobiles, par exemple des portes latérales, est généralement assurée par un joint tubulaire périphérique continu. Mais à l'avant des portes, du côté des charnières, divers éléments, tels que le contacteur du plafonnier, un conduit de chauffage ou une came d'arrêt de porte, obligent à donner à ce joint un parcours tourmenté, ce qui nuit à l'étanchéité, à la bonne tenue mécanique et à la facilité de montage.

La présente invention a pour objet un dispositif d'étanchéité pour panneau ouvrant de véhicule, qui remédie à ces inconvénients.

Ce dispositif qui comprend un profilé d'étanchéité appliqué sur le chant du panneau (dispositif de type connu en soi, par exemple de DE-A 2 122 812), est caractérisé en ce que le profilé est interrompu au droit d'un élément émergeant et en ce qu'un joint moulé est disposé sur le chant du panneau autour de cet élément émergeant pour assurer la continuité de l'étanchéité.

Les extrémités des portions du profilé situées en regard sont de préférence encastrées dans des évidements du joint moulé.

On a décrit ci-après, à titre d'exemple non limitatif, un mode de réalisation du dispositif selon l'invention, avec référence au dessin annexé dans lequel :

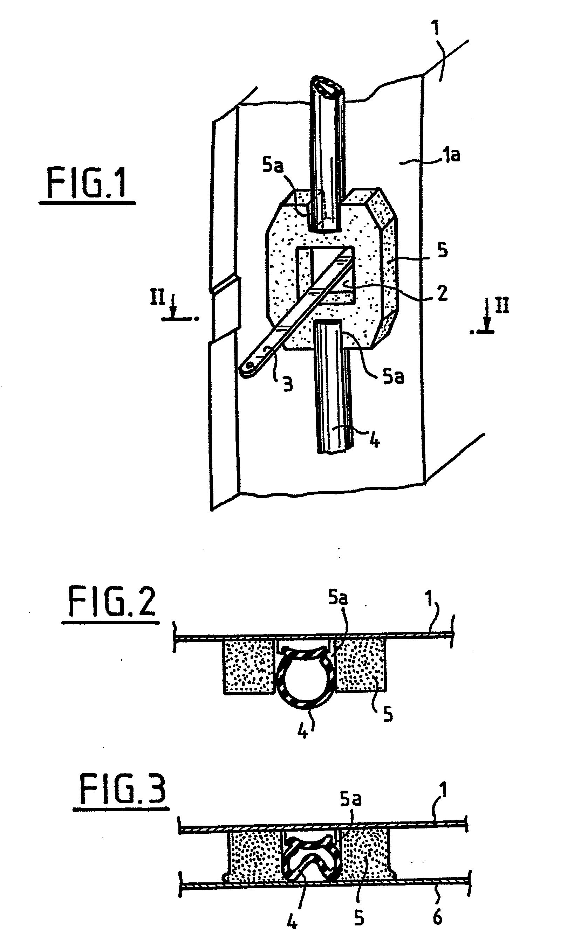

La Figure 1 est une vue en perspective du dispositif en place sur le chant d'une porte;

La Figure 2 est une vue en coupe suivant II-II de la Figure 1, la porte étant ouverte;

La Figure 3 est une vue semblable à la Figure 2, la porte étant fermée.

Au dessin on voit en 1 une porte de véhicule dont le chant 1a présente une ouverture 2 pour le passage d'une came d'arret de porte 3.

Sur le chant 1a est appliqué un profilé d'étanchéité tubulaire 4 qui est interrompu à proximité de l'arrêt de porte 3. Un joint moulé 5 est disposé autour de cet arrêt de porte. Ce joint présente deux évidements opposés 5a dans lesquels sont engagées les extrémités situées en regard des portions interrompues du profilé 4; ce joint assure ainsi la continuité de l'étanchéité.

Quand la porte 1 est fermée, elle écrase légèrement le joint moulé 5 contre la caisse 6 du véhicule. Elle écrase également le joint 4; les extrémités des portions interrompues de ce joint s'écrasent contre les flancs des évidements 5a du joint 5, ce qui assure l'étanchéité à la jonction du profilé 4 et du joint moulé 5.

## Revendications

1. Dispositif d'étanchéité pour panneau ouvrant de véhicule, notamment pour porte latérale, qui comprend un profilé d'étanchéité (4) appliqué sur le chant (1a) du panneau (1), caractérisé en ce que le profilé (4) est interrompu au droit d'un élément émergeant (3) et en ce qu'un joint moulé (5) est disposé sur le chant (1a) du panneau autour de cet élément émergeant (3) pour assurer la continuité de l'étanchéité.

2. Dispositif selon la revendication 1, caractérisé en ce que les extrémités des portions du profilé (4) situées en regard sont encastrées dans des évidements (5a) du joint moulé (5).

## Patentansprüche

1. Dichtungsvorrichtung für eine Kraftfahrzeugklappe, insbesondere für eine Seitentür, die ein an der Schmalseite (1a) der Klappe (1) befestigtes Dichtungsprofil (4) aufweist, dadurch gekennzeichnet, daß das Dichtungsprofil (4) senkrecht zu einem herausragenden Element (3) unterbrochen ist, und auf der Schmalseite (1a) der Klappe um dieses herausragende Element (3) herum ein Dichtungsformteil (5) angeordnet ist zur Sicherstellung des stetigen Verlaufs der Dichtung.

2. Dichtungsvorrichtung nach Anspruch 1, dadurch gekennzeichnet, daß die einander gegenüberliegenden Teile des Dichtungsprofils (4) in Aussparungen (5a) des Dichtungsformteils (5) eingelassen sind.

## Claims

1. Sealing device for a vehicle opening panel, particularly for a side door, which comprises a sealing extrusion (4) applied to the edge (1a) of the panel (1), characterized in that the extrusion (4) is interrupted in line with an emergent element (3) and in that a moulded seal (5) is disposed on the edge (1a) of the panel about this emergent element (3) so as to provide sealing continuity.

2. Device according to claim 1, characterized in that the ends of the portions of the extrusion (4) facing each other are embedded in recesses (5a) of the moulded seal (5).

FIG.1

FIG.2

FIG.3